# EUROPÄISCHE PATENTANMELDUNG

(11) **EP 1 157 736 A1**
(43) Veröffentlichungstag der Anmeldung: **28.11.2001**
(21) Anmeldenummer: 01810477.8
(22) Anmeldetag: 15.05.2001
(51) Int. Cl.: B01J 2/10, B01J 2/16, B01F 15/00, B65G 45/00

(54) **Anlage und Verfahren zur quasi-kontinuierlichen Behandlung eines teilchenförmigen Gutes**

(30) Priorität: 20.05.2000 CH 10102000
(71) Anmelder: Glatt Maschinen- und Apparatebau AG, CH-4133 Pratteln (CH)
(72) Erfinder: Boos, Günther, 79713 Bad Säckingen (DE)
(74) Vertreter: Schwander, Kuno

(57) **Zusammenfassung**

Die erfindungsgemässe Multicellanlage (1) ist für den chargenweisen und insbesondere quasi-kontinuierlichen Betrieb, also für die kontinuierliche Bearbeitung von rasch aufeinanderfolgenden Chargen, geeignet. So zum Beispiel zur Herstellung von gut fliessfähigen Granulaten, welche zur Abfüllung in Kapseln, Sachets geeignet sind. Die Anlage (1) stellt insbesondere ein multifunktionales System dar, das die Verfahrensschritte Chargenvorlage (2), Dosierung (3), Mischung/Granulierung(4), Trocknung (5), Produktkühlung und Produktsammlung (6, 7) in einer sehr kompakten Bauweise miteinander kombiniert. Die einzelnen Chargen werden innerhalb der Anlage durch einen hermetisch nach aussen abgeschlossenen Produktweg geführt, in dem allenfalls noch zusätzlich und mindestens in Teilabschnitten ein gegenüber dem Umgebungsdruck erniedrigter Innendruck herrscht. Dies ermöglicht zusammen mit den an einer zentralen Reinigungsanlage angeschlossenen Reinigungsdüsen (30) einen kontaminationsfreien Betrieb sowohl mit wässrigen als auch mit organischen Ausgangsprodukten.

## Beschreibung

Die Erfindung betrifft eine Einrichtung und ein Verfahren zur quasi-kontinuierlichen Behandlung eines teilchenförmigen Gutes.

Es sind verschiedene zur chargenweisen und/oder quasi-kontinuierlichen Behandlung eines teilchenförmigen Gutes dienende Einrichtungen bekannt, so zum Beispiel Wirbelschicht-Einrichtungen, wie sie etwa in der CH-A 686 343, und Misch-und Rühreinrichtungen, wie sie etwa in der WO-A 91/06365 offenbart sind. Diese bekannten Einrichtungen können abhängig von der Art des zu behandelnden Gutes und des daraus zu erzeugenden Produktes unabhängig voneinander eingesetzt oder aber in einer sogenannten Multicellanlage miteinander kombiniert werden.

In Wirbelschicht-Einrichtungen der vorgenannten Art wird das teilchenförmige Gut mit Gas, insbesondere Luft, verwirbelt und dabei einer Behandlung unterzogen. Dies kann zum Beispiel ausschliesslich aus einer Trocknung des Gutes bestehen. Häufig wird jedoch das Gut im Wirbelraum zuerst mit einer Flüssigkeit besprüht und dabei mit einem Überzug versehen oder granuliert und danach getrocknet. Demgegenüber sind die Misch- und Rühreinrichtungen gemäss WO-91/06365 ausschliesslich zum Granulieren und/oder Mischen eines Gutes mit einem Fluid, zum Beispiel Wasser, einer wässrigen Lösung oder einem organischen Lösungsmittel bestimmt.

Beide Einrichtungen werden bereits in Kombination miteinander zur Herstellung von Produkten für die Bildung von Arzneimitteln, Nahrungsmitteln, Agrochemikalien oder Saatgutpellets eingesetzt.

Zur Herstellung eines zum Beispiel als Arzneimittel oder als Bestandteil eines solchen vorgesehenen Granulates kann man beispielsweise mindestens eine Trägersubstanz, ein Bindemittel und mindestens einen pharmazeutischen Wirkstoff in trockenem Zustand miteinander vermischen und die Mischung dann zum Granulieren befeuchten. Das so hergestellte Zwischenprodukt kann dann zur Weiterverarbeitung, zum Beispiel zum Trocknen, einer Wirbelschicht-Einrichtung der vorgenannten Art weitergeleitet werden.

Wenn hohe Anforderungen an die Reinheit der in einer Multicellanlage zu verarbeitenden teilchenförmigen Güter gestellt werden, ist es oft und insbesondere beim Wechsel der verarbeiteten Güter erforderlich, dass das Bedienungspersonal die verschiedenen Einrichtungen der Anlage reinigt, was durch Öffnen der entsprechenden Behälter und Reinigen von ausgebauten Einrichtungsbestandteilen erfolgt. Wenn toxische oder sonst gesundheitsgefährdende Güter verarbeitet wurden, kann das Öffnen der verschiedenen Behälter und das Ausbauen von Teilen eine Kontamination der Umgebung, eine Kontamination des Gutes und eine Gefährdung der den Behälter reinigenden Person(en) verursachen. Demgegenüber hat sich insbesondere bei pharmazeutischen Produktionsanlagen gezeigt, dass das Öffnen der verschiedenen Behälter und das Ausbauen von Teilen zu Reinigungszwecken auch eine unerwünschte Kontamination der Anlage mit Verunreinigungen der Umgebung verursachen kann, so dass in diesem Fall noch zusätzliche Massnahmen für die Reinigung der Anlage zu treffen sind. Aus der EP-0 781 949 und US 3 138 167 sind zwar Wirbelschicht-Einrichtungen beziehungsweise Mischer bekannt, die mit Hilfe von speziellen Reinigungsdüsen eine Reinigung des dazugehörigen Behälters ohne Öffnen desselben erlaubt. Solche Reinigungsmittel sind aber für Misch- und Rühreinrichtungen der erstgenannten Art nicht bekannt.

Des weiteren werden bei der Herstellung eines Produktes üblicherweise zuerst zu Versuchszwecken relativ kleine Mengen eines Endproduktes hergestellt, deren Massen beispielsweise in der Grösse von einigen wenigen Kilogrammen liegen. Wenn die kommerzielle Verwertung des Produktes beginnt, sind je nach Bedarf grössere Mengen des Produktes herzustellen. Für die kommerzielle Produktion werden dann grössere Einrichtungen verwendet, in denen Chargen mit Massen in der Grösse von 100 kg und mehr behandelt werden können.

Dieses Vorgehen hat den Nachteil, dass für die Herstellung eines Produktes mehrere verschieden grosse Anlagen benötigt werden, deren Beschaffung und Installation grosse Kapitalinvestitionen erfordern. Wenn die Behandlung eines Gutes zuerst in kleinen und danach in grösseren Einrichtungen durchgeführt wird, muss man für den häufig auch als "Scale up" bezeichneten Einrichtungswechsel jeweils durch weitere Versuche neue Verfahrensparameter ermitteln, um das Produkt mit der gewünschten Qualität wirtschaftlich und reproduzierbar herstellen zu können. Diese Versuche sind sehr zeitraubend und ebenfalls kostspielig. Zudem sind die bekannten Einrichtungen und Anlagen meistens derart ausgebildet, dass zumindest zum Einbringen der Gutcharge und Entnehmen des Endproduktes durch mindestens eine Person auszuführende Manipulationen erforderlich sind. Diese bekannten Einrichtungen und Anlagen können daher nicht vollständig automatisch betrieben werden und sind für einen 24-Stunden-Dauerbetrieb schlecht geeignet. Ein weiterer Nachteil liegt im engen Anwendungsbereich der installierten Anlagen

Der Erfindung liegt nun die Aufgabe zugrunde, Nachteile der vorgenannten Einrichtungen zu beheben und eine neuartige Multicellanlage vorzuschlagen, welche ihrerseits ohne Öffnen und Zerlegen von apparativen Bestandteilen, also mit geringem Arbeits- und Zeitaufwand sauber und absolut hygienisch gereinigt werden kann. Die Anlage soll zudem so ausgebildet sein, dass sie vollständig automatisch betrieben werden kann.

Diese Aufgabe wird erfindungsgemäss durch eine Multicellanlage mit den Merkmalen des Anspruchs 1, eine Rühr- und Mischeinrichtung bzw. Granuliereinheit mit den Merkmalen des Anspruchs 4 und durch ein Verfahren mit den Merkmalen des Anspruchs 10 gelöst.

Vorteilhafte Ausgestaltungen der Anlage und des Verfahrens sind Gegenstand der abhängigen Ansprüche.

Die erfindungsgemässe Multicellanlage ist für den chargenweisen und insbesondere quasi-kontinuierlichen Betrieb, also für die kontinuierliche Bearbeitung von rasch aufeinanderfolgenden Chargen, geeignet. So zum Beispiel zur Herstellung von gut fliessfähigen Granulaten, welche zur Abfüllung in Kapseln, Sachets und/oder zur Weiterverarbeitung in tablettenartige Produkte für die pharmazeutische, feinchemische und Lebensmittel-Industrie geeignet sind.

Die erfindungsgemässe Anlage stellt ein multifunktionales System dar, das die Verfahrensschritte Chargenvorlage, Dosierung, Mischung/Granulierung, Trocknung (Vor- und Nachtrocknung) und Produktsammlung sowie allenfalls noch zusätzlich die Verfahrensschritte Feuchtsiebung (nach Mischung/Granulierung), Coating, Additivzumischung, Trockensiebung (nach Trocknung) und Produktkühlung in einer sehr kompakten Bauweise miteinander kombiniert. Die einzelnen Chargen werden innerhalb der Anlage durch einen hermetisch nach aussen abgeschlossenen Produktweg geführt, in dem allenfalls noch zusätzlich und mindestens in Teilabschnitten ein gegenüber dem Umgebungsdruck erniedrigter Innendruck herrscht. Dies ermöglicht zusammen mit den nachfolgend noch näher bezeichneten Reinigungsmitteln einen kontaminationsfreien Betrieb sowohl mit wässrigen als auch mit organischen Formulierungen.

Die Anlage ist darüber hinaus für den Dauereinsatz konzipiert und erfüllt die hohen hygienischen Anforderungen der pharmazeutischen Industrie an die Durchführung der Teiloperationen Dosieren, Mischen, Granulieren und Trockenen. Die erfindungsgemässe Anlage wird vorzugsweise komplett automatisch gesteuert.

Die Granulat-Herstellung erfolgt in der Regel auf wässriger Basis, kann aber beim Einsatz einer umweltschutzgerechten Lösungsmittelrückgewinnungsanlage auch mittels organischen Lösungsmitteln durchgeführt werden.

Beim quasi-kontinuierlichen Betrieb wird die vorgelegte Gesamtcharge in einem Vorlagebehälter-Dosiersystem in die einzelnen Teilchargen, auch Subunits genannt, aufgeteilt. Die Teilchargen können je nach Anlagengrösse von 2 - 15 kg betragen. Ein wesentlicher Vorteil der erfindungsgemässen Anlage liegt daher darin, dass bei der gleichen Anlagengrösse die einzelnen Chargen immer konstant bleiben und dass mit derselben Anlage ohne weiteres auch eine Erhöhung der Produktionsrate möglich ist, und zwar durch Steigerung der Anzahl Chargendurchläufe pro Zeiteinheit. Für den Benutzer bietet dies einen bedeutenden wirtschaftlichen Vorteil, da in diesem Fall auf den kostspieligen Einrichtungswechsel und die zeitraubenden Scale-Up-Versuche bei den Einheitsoperationen Mischen, Granulieren und Trocknen verzichtet werden kann.

Im folgenden wir die Erfindung anhand von in der Zeichnung dargestellten Ausführungsbeispielen näher beschrieben. In der Zeichnung zeigt
die Figur 1 eine schematische Darstellung einer erfindungsgemässen Anlage mit einer Granuliereinheit und einer Wirbelschicht-Einrichtung der eingangs genannte Art,
die Figur 2 eine erste Ausführungsform einer Granuliereinheit in einem vereinfachten und schematisierten Axialschnitt,
die Figur 3 eine schematisierte Draufsicht auf die Kammer und den Rotor der Granuliereinheit in der in der Figur 2 durch den Pfeil III bezeichneten Blickrichtung, die
Figur 4 eine zweite Ausführungsform einer Granuliereinheit in einem ebenfalls vereinfachten und schematisierten Axialschnitt, und
die Figur 5 eine schematisierte Draufsicht auf den Antriebsteil des zur Granuliereinheit der Figur 4 gehörenden Rotors.

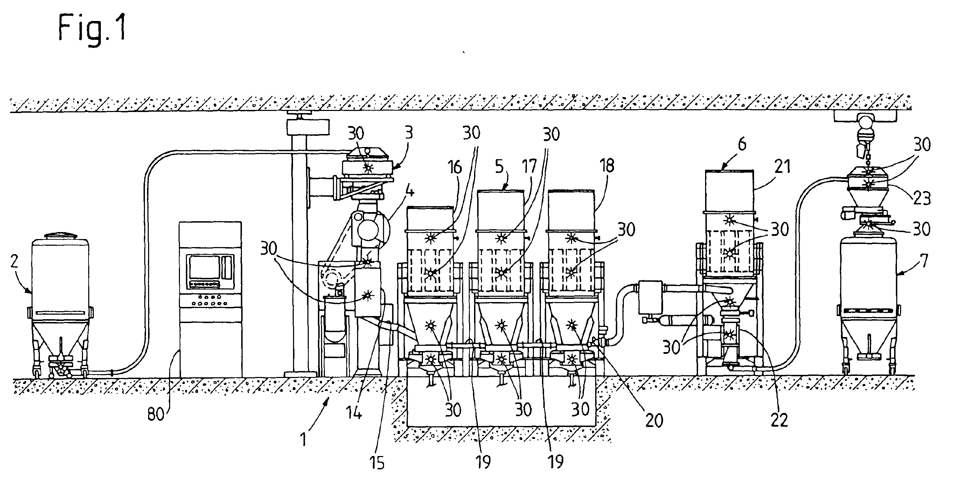

Die in der Figur 1 gezeichnete Anlage ist für die Herstellung von Tabletten, Sachets und Kapseln bestimmt und besitzt in der Reihenfolge der Gutbehandlung folgende wesentliche Produktionseinheiten:
- einen Container 2 zur Aufnahme des vorgemischten Rohproduktes,
- ein Fördersystem 3 enthaltend eine Dosierungsvorrichtung und eine Einwaagevorrichtung,
- einen Mischer 4, auch Granuliereinheit genannt, zum Granulieren des teilchenförmigen Gutes,
- eine Wirbelschicht-Einrichtung 5 zum allenfalls Weitergranulieren, Trocknen und Beschichten des Gutes
- einen Produktabscheider 6, und
- einen Endproduktcontainer 7 zur Aufnahme des Produktes und Vorbereitung desselben für die Weiterverarbeitung, beispielsweise Tablettierung.

Die vorgenannten Produktionseinheiten gehören im wesentlichen zum allgemeinen Stand der Technik und sind in ihrer Bauweise und Funktion zum Teil aus der CH-A 686 343, der WO 91/06365 und der EP-0 781 949 bekannt. Soweit die einzelnen Komponenten nachfolgend nicht im Detail beschrieben sind, entsprechen sie den in diesen Vorveröffentlichungen offenbarten Vorrichtungen. Es wird daher hiermit ausdrücklich auf diese Publikationen bezug genommen.

Die erfindungsgemässe Anlage 1 besitzt ferner eine schematisch in der Figur 1 dargestellte Steueranlage 80. Zu dieser gehört eine Steuerschaltung mit elektrischen und/oder elektronischen Bauteilen zum Messen, Steuern und Regeln. Die Steueranlage 80 ist insbesondere so ausgebildet, dass die nachfolgend noch näher erläuterten Produktions- und Reinigungsprozesse vollautomatisch oder zumindest halbautomatisch durchgeführt und gesteuert werden können.

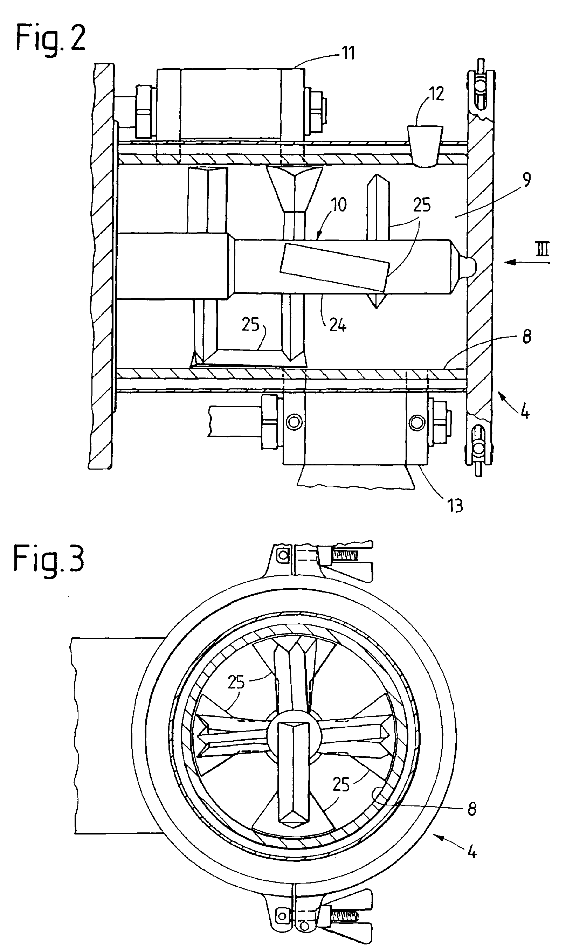

Die in den Figuren 2 und 3 im Detail gezeichnete Granuliereinheit 4 besitzt eine Kammer 8 mit einem vorzugsweise doppelwandigen zylindrischen Mantel und einem im Innenraum 9 angeordneten Rotor 10. In die Kammer 8 führen ein Guteinlass 11 und ein Flüssigkeitseinlass 12. Letztere ist beispielsweise mit einer Einstoffdüse zum Zersprühen einer Flüssigkeit ausgestattet. Ferner ist die Kammer 8 mit einem Gutauslass 13 versehen. Die Einlässe 11 und 12 und der Auslass 13 sind darüber hinaus mit Verschlussklappen ausgerüstet, so wies das von bereits bekannten Granuliereinheiten bekannt ist.

Der Gutauslass 13 ist mit einer Homogenisiervorrichtung 14 verbunden. Diese besitzt ein Gehäuse, ein Sieb sowie einen Rotor und ermöglicht, allfällige Gutklumpen zu zerkleinern. Der Auslass der Homogenisiervorrichtung 14 ist über eine nach unten verlaufende, mindestens zum grössten Teil geneigte Leitung 15 mit der als Ganzes mit 5 bezeichneten, und im wesentlichen zur quasi-kontinuierlichen Trocknung des Gutes dienenden Wirbelschicht-Einrichtung 5 verbunden. Die Homogenisiervorrichtung 14 besitzt ferner einen mit einem Filter versehenen Lufteinlass, durch den Umgebungsluft in den Innenraum der Homogenisiervorrichtung 14 eingesaugt und filtriert werden kann. Abgesehen von diesem Lufteinlass sind die Innenräume des Gutauslasses 13, der Homogenisiervorrichtung 14 und der Leitung 15 gasdicht gegen die Umgebung abgeschlossen.

Die Wirbelschicht-Einrichtung 5 besitzt mindestens zwei, vorzugsweise mindestens drei, in kleinen Abständen nebeneinander angeordnete Wirbelschicht-Behälter 16, 17 und 18. Diese werden im folgenden in der Reihenfolge der Bezugszeichen als erster, zweiter und dritter Wirbelschicht-Behälter bezeichnet. Im übrigen sind die Behälter so ausgebildet und miteinander verbunden, wie dies in der CH-A 686 343 beschrieben ist. So sind die Behälter 16, 17 und 18 durch Durchgänge 19 miteinander verbunden und es besitzt der letzte Behälter 18 einen Gutauslass 20, der über eine Leitung mit dem Produktabscheider 6 verbunden ist. Im Verbindungsrohr zwischen der letzten Trocknungsstufe und dem Produktabscheider 6 kann zusätzlich noch ein Dosiertrichter angebracht sein, der es erlaubt, dem Trockengranulat kleine Mengen an Zuschlagstoffen beizugeben.

Jeder Behälter 16, 17 und 18 verfügt über ein separates Zuluft- und Abluftsystem, so dass die Prozessluft für jeden einzelnen Behälter automatisch gesteuert, d.h. bezüglich Feuchte und Temperatur konditioniert und energetisch optimiert werden kann. Dadurch lassen sich einzelne Trocknungsstufen optimal bewirtschaften und an die spezifischen Produktcharakteristika anpassen.

An jedem Wirbelschicht-Behälter 16, 17, 18 können zudem manuell bedienbare und/oder automatisch steuerbare Probeentnahme-Vorrichtungen vorgesehen sein, die es erlauben, während des Prozesses Proben des durchlaufenden Produktes zu nehmen. Ein allenfalls noch zusätzlich vorhandener Einlass erlaubt auch noch die Zudosierung mindestens einer zusätzlichen, pulverförmigen Komponente zum in der Wirbelschicht-Einrichtung behandelnden Gut. Jeder Behälter kann auch noch mit einer separaten Temperatur- und Luftmengen-Regelung ausgerüstet sein. Dies gestattet, den Prozess optimal auf das eingesetzte Produkt und dessen Eigenschaften abzustimmen.

Der Produktabscheider 6 besitzt zum Beispiel einen Zyklon-Filter-Abscheider 21 oder ein Filtersystem, wie es bei Wirbelschichtbehälter eingesetzt wird, und eine Schnellsiebvorrichtung 22 zur Trockenprodukt-Siebung. Mit dem Produktabscheider 6 ist schliesslich der Endproduktcontainer 7 verbunden, welchem in Durchflussrichtung noch zusätzlich ein Vakuum-Saug-fördersystem 23 vorgeschaltet ist. Sowohl die Verbindungsleitung zwischen Wirbelschicht-Einrichtung 5 und Produktabscheider 6 als auch die Verbindungsleitung zwischen Produktabscheider 6 und Endproduktcontainer 7 sind im Rahmen der Erfindung gasdicht gegen die Umgebung abgeschlossen.

Die in den Figuren 2 und 3 in vergrössertem Massstab dargestellte Granuliereinheit 4 besitzt eine nicht näher bezeichnete Antriebsvorrichtung mit einem elektrischen Motor und einem Getriebe. Der Motor ist dabei derart ausgebildet, dass die Drehrichtung seiner Welle elektrisch steuerbar, d.h. umkehrbar ist. Der Antrieb erfolgt vorzungsweise über ein untersetztes Zahnriemengetriebe, dessen Drehzahl über einen Frequenzumformer stufenlos verstellbar ist.

Der Rotor 10 weist eine Anzahl um seine Welle 24 herum und entlang von dieser verteilte Rührorgane 25 auf. Diese Rührorgane dienen alle zum Bewegen und Rühren des Gutes, sind jedoch verschieden ausgebildet und können daher abhängig von ihren zusätzlichen zum Rühren vorgesehenen Funktionen in Förder-Rührorgane, Zerteiler und/oder Zerhacker und Schab-Rührorgane unterteilt werden. Die Rührorgane 25 ragen von der Achse und der Welle 24 weg bis mindesten annähernd zur Mantel-Innenfläche, wobei zwischen dieser und den sich am weitesten von der Achse entfernten Rändern der Rührorgane schmale Spalte von vorzugsweise wenigen Zehntel Millimetern bilden.

Der vorzugsweise für die Herstellung von Nassgranulaten einsetzbare Mischer 4 hat ein Füllvolumen von 4 bis 30 l und erlaubt abhängig vom herzustellenden Produkt die Behandlung von über 500 Chargen von 9 bis 15 kg in Folge ohne Zwischenreinigung. Der zylindrische Mantel 8 ist wie bereits vorstehend erwähnt, doppelwandig ausgebildet. Der Gehäusewand des Mischers 4 kann somit durch Hindurchleiten eines Kühlfluides durch den doppelwandigen Mantel 8 gekühlt und es kann dadurch die Innentemperatur während der Granulierung tief gehalten werden. Durch die niedrige Innentemperatur herrscht dann immer ein feuchtes Klima, wodurch ein Ankleben des Granulates an der Mantelinnenwand vermieden wird.

Die Anlage 1 besitzt als wesentlichen Bestandteil ein Reinigungssystem, welches dadurch gekennzeichnet ist, dass an verschiedenen Positionen des Produktweges spezielle Reinigungsdüsen angeordnet sind, die eine Reinigung der Anlage ohne Öffnen der verschiedenen Anlageeinheiten und insbesondere vollautomatisch und ohne jeglichen manuellen Eingriff durch eine Person erlauben, so dass mit dieser Anlage ein sehr schneller Produktwechsel durchgeführt werden kann. Als für diesen Zweck vorgesehene Reinigungsdüsen eignen sich vor allem Reinigungsdüsen der Firma Glatt GmbH, DE-Binzen, welche in EP-A-0 781 585 und EP-A-0 781 587 im Detail beschrieben sind. Was die bauliche Ausgestaltung und Funktion der erfindungsgemäss verwendbaren Reinigungsdüsen betrifft, so wird hiermit auch ausdrücklich auf diese Vorveröffentlichungen bezug genommen.

Die Anlage 1 ist ferner wasserdicht gebaut. Es können daher die einzelne Teile für den Reinigungsprozess bei Bedarf geflutet werden. Dadurch kann die Reinigungsdauer von mehr als einen Arbeitstag - wie dies zum Beispiel bei herkömmlichen Wirbelschicht-Einrichtungen der Fall ist - auf wenige Stunden reduziert werden.

Erfindungsgemäss sind die Reinigungsdüsen an den in der Figur 1 mit 30 bezeichneten Positionen angeordnet. So
- in der Zu- und Ableitung des Mischers 4,
- in der Homogenisiervorrichtung 14,
- in den Behältern der Wirbelschicht-Einrichtung 5,
- in dem Produktabscheider 6, und dort insbesondere im Zyklon-Filter-Abscheider 21 und in der Schnellsiebvorrichtung 22 und schliesslich auch
- im Endproduktcontainer 7, und dort vorzugsweise im Eintragungsbereich.

Weitere Reinigungsdüsen sind im gezeichneten Ausführungsbeispiel noch zusätzlich im Fördersystem 3 und im Vakuum-Saug-Fördersystem 23 angeordnet.

Die Reinigungsdüsen sind an diesen bevorzugten Positionen so ausgebildet, dass sie bei Gebrauch in den Innenraum des entsprechenden Behälters oder Leiterabschnittes ausgefahren werden. Bei Nichtgebrauch werden sie dann vollständig in die den Behälter bzw. den Leiterabschnitt begrenzende Wandung eingefahren, so dass beim Betrieb der Anlage 1 keine Kanten und Ecken vorhanden sind, welche unerwünschte Ablagerungen von Gut-Teilchen ermöglichen oder den Produktfluss behindern.

Wie bereits erwähnt, liegt der Erfindung die Aufgabe zugrunde, eine Multicellanlage vorzuschlagen, welche voll automatisch, also ohne Handeingriff gereinigt werden kann, so dass vor allem bei einem Produktwechsel keine Kontamination des Produktweges zu befürchten ist. Die der Granuliereinheit 4 vorgeschalteten und nachgeschalteten Einrichtungen können für diesen Zweck dem Stand der Technik entsprechend ohne grossen Aufwand mit den Reinigungsdüsen der vorgenannten Art ausgerüstet werden. Das gleiche gilt für die wahlweise absperrbaren und freigebbaren Anschlüsse 11, 12 und 13 der Granuliereinheit 4.

Was jedoch die vollautomatische Reinigung der Granuliereinheit 4 selbst betrifft, so weist dieser gegenüber bekannten Granulier- und Mischeinrichtungen einige wesentliche bauliche Veränderungen auf.

Ein wesentliches Problem ist in diesem Fall die Reinigung des Innenraumes, da hier zu Erreichung einer möglichst geringen Belagsbildung an der Mantel-Innenfläche sämtliche Mischwerkzeuge so angeordnet sind, dass der gesamte Innenzylinder, sowohl umfangseitig als auch stirnseitig, vollkommen von den Mischwerkzeugen in einem Abstand von wenigen Zehntel Millimetern abgestrichen werden. Eine Reinigung des Behälterinnenraumes mit Reinigungsdüsen der vorstehend genannten Art ist hier also nicht möglich. Es wird daher vorgeschlagen, mehrere Flachstrahldüsen mitlaufend und permanent auf der Mischerwelle anzubringen, die die Mantel-Innenfläche mit einem direkten Wasserstrahl während der Rotation der Mischwerkzeuge erreichen können.

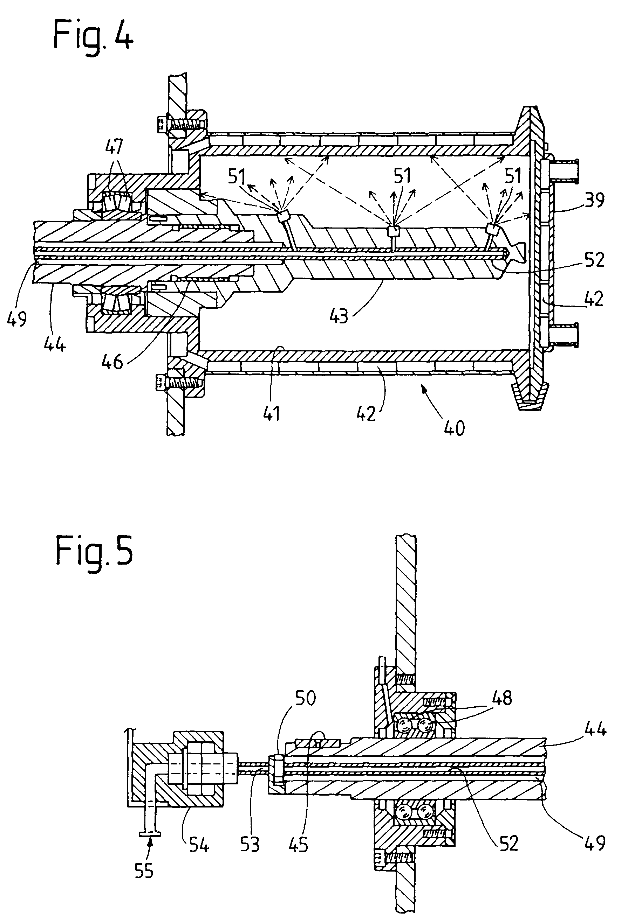

Eine Granuliereinheit mit einer solchen Mischerwelle ist in den Figuren 4 und 5 dargestellt und als ganzes mit 40 bezeichnet. Sie besitzt eine zylindrische Kammer mit einem doppelwandigen Mantel 41 und einer ebenfalls doppelwandigen Frontwand 39, so dass zur Kühlung des Kammer-Innenraumes in bekannter Art und Weise ein Kühlfluid in die Zwischenräume 42 eingeleitet werden kann.

Die ohne Mischwerkzeuge dargestellte Welle 43 ist auf der Antriebswelle 44 aufgesteckt und wird durch diese angetrieben. Die Kraftübertragung erfolgt hierbei durch einen am freien Ende der Antriebswelle 44 angeordneten Zahnriemenantrieb 45 und eine Mehrfachverzahnung 46. Die Lagerung der Welle 44 erfolgt durch die Kugellager 47 und 48. Die kraftschlüssige Axialverbindung und damit die axiale Position der Welle 43 erfolgt durch einen Zuganker 49 und eine Mutter 50. Die Mischerwelle 43 ist somit freifliegend gelagert und die Abdichtung der Wellendurchführung erfolgt durch eine nicht näher bezeichnete gas- oder flüssigkeitsgespülte, doppelt wirkende Gleitringdichtung.

Erfindungsgemäss erfolgt die Reinigung des Mischer-Innenraumes mittels Flachstrahldüsen 51, die auf der Mischerwelle 43 angebracht sind. Die Düsen 51 sind über Durchgänge mit einer Steuerlanze 52 verbunden, welche ihrerseits einen axialen Durchgang 53 besitzt und zur Bedienung der Düsen 51 mit einem Flüssigkeitsspender 54, auch Drehverteiler genannt, im Antriebsbereich des Mischers 40 verbunden ist. Letzterer ist also auf der einen Seite mit der nicht gezeichneten Reinigungsvorrichtung, die das Waschmedium bereitstellt, verbunden, und sitzt auf der anderen Seite auf der Steuerlanze 52, die sich koaxial durch den Zuganker 49 hindurch und in die Mischerwelle 43 erstreckt.

Mischerwelle 43 und Steuerlanze 52 sind nicht miteinander verbunden, haben aber beim Betrieb des Mischers 40 durch eine nicht gezeigte Mitnahmeeinheit die gleiche Drehzahl.

Die Düsen 51 haben einen Austrittswinkel von ca. 120° und können so annähernd die gesamte Kammer-Innenfläche direkt erreichen. In der Vorderansicht gesehen, können sich diese Düsen auf dem Umfang der Mischerwelle 43 entsprechend verteilt befinden. Die einzelnen Düsen 51 sind beispielsweise gleichmässig über einen Kreisumfang von 360° angeordnet, und zwar so, dass sich die Strahlkegel der verschiedenen Düsen 51 überlappen. Je nach Grösse des Mischers 40 kann die Position und die Anzahl der Reinigungsdüsen 51 variiert und optimiert werden. Vorzugsweise sind 4 bis 7 Düsen 51 eingebaut. Der Ablauf der Reinigung erfolgt in üblicher Weise, durch aufbereitetes Reinigungswasser mit einem Waschmedium.

Da das Produkt beim Betrieb des Mischers 4 durch die Zentrifugalkraft nach aussen gedrückt wird, also von den Düsen 51 weg, wird ein Einpressen des Produktes in die Düsen 51, wie es beispielsweise bei wandbündigen Düsen auf dem Zylindermantel der Fall wäre, vermieden.

Die Flachstrahldüsen 51 sind vorzugsweise durch sogenanntes "Kaltdehnen" (Abkühlen der Düsen in flüssigem Stickstoff bevor diese in genau passende Bohrungen eingebracht werden) an der Mischerwelle 43 befestigt, so dass hierdurch ein Befestigen der Düsen ohne Aufschweissen, und ein Austauschen der Düsen, zwar durch deren Zerstörung, aber wiederum ohne Schweissen, möglich ist.

Sind alle Düsen mit einer gemeinsamen Leitung über den Drehverteiler verbunden, so besteht die Möglichkeit, dass eine oder mehrere Düsen verstopfen und dass dadurch der Austritt der Reinigungsflüssigkeit allenfalls nur durch eine Düse stattfindet. Eine Kontamination wäre die Folge. Um dies zu verhindern, werden die Düsen vorzugsweise einzeln angesteuert. Hierzu kann die Steuerlanze über einen Pneumatikzylinder, der so viele verschiedene Positionen anfahren kann, wie Düsen auf der Welle vorhanden sind, axial verschoben werden. In diesem Fall befinden sich auf der Steuerlanze Öffnungen, von denen jeweils eine mit einer bestimmten Stellung des Pneumatikzylinders in Übereinstimmung mit dem Eintrittskanal einer Flachstrahldüse gebracht werden kann. Das bedeutet, dass in jeweils einer Position des Zylinders nur eine Düse mit Reinigungsflüssigkeit beaufschlagt werden kann. Die Abdichtung der verschiedenen Lanzenöffnungen gegenüber der Welle und des Zugankers erfolgt beispielsweise durch O-Ringe.

Im folgenden wird der Betrieb der in der Figur 1 gezeichneten Anlage näher erläutert, wobei auch hier soweit die einzelnen Verfahrensschritte nicht im Detail beschrieben sind, auf die vorgenannten Vorveröffentlichungen verwiesen wird.

Der Betrieb der erfindungsgemässen Anlage gliedert sich in folgende Prozessabschnitte auf:
1. Entleerung des Containers 2 und Ausdosierung des zu behandelnden Gutes auf Einzelchargen:
   Der Container 2 wird mit vorgemischtem Rohprodukt in den Prozessbereich der Anlage eingefahren und auf einer Container-Entleerstation positioniert. Anschliessend wird ein Entleerungstrichter mit Hilfe von pneumatischen Zylindern an den Anschlussflansch des Containers angepresst. Durch das Anpressen und Deformieren einer dazugehörigen Lappendichtung wird dann der Anschluss abgedichtet.
   In einem nächsten Schritt wird das Produkt mit Hilfe des Fördersystems 3 in einen Pufferbehälter gefördert, dosiert und eingewogen. Mittels Schwerkraft gelangen dann die ausgewogene Chargen in die Granuliereinheit 4.
2. Granulat-Aufbereitung:
   Für die Nassgranulation wird mittels einer Hochdruck-Airless-Pumpe das Sprühmedium in den Mischer eingesprüht. Durch den periodischen Umkehrbetrieb der Mischerwelle wird das Produkt zwischen den Stirnseiten axial hin und her bewegt und zudem zentrifugal nach aussen beschleunigt. Dadurch erreicht man ein erzwungenes Kneten des Granulates, und damit ein hochverdichtetes Granulat.
   Die Granulierung kann auf zwei unterschiedliche Arten erfolgen:
   - Binder wird mit der Sprühlösung eingesprüht und mit der Vormischung verbunden.
   - Binder befindet sich in trockener Form in der Vormischung und wird mit Hilfe der Sprühlösung gelöst und bindet die Vormischung zum gewünschten Granulat.

   Nach dem Granuliervorgang wird der Mischer bei optimaler Drehrichtung und Drehfrequenz der Mischwelle entleert. Das Nassgranulat wird dann mit Hilfe des Unterdruckes durch das nachgeschaltete Feuchtsieb gefördert und einer ersten Trockner-Stufe zugeführt.
3. Wirbelschicht-Trocknung und Wirbelschicht-Coating:
   Das Vor- und Haupttrocknen des Nassgranulates erfolgt in mehreren Trocknungsbehältern. Bei Bedarf kann der Wirbelschicht-Trocknungsbehälter bzw. der Wirbelschichtcoatingbehälter mit einer Lösungsmittel-Rückgewinnungsanlage kombiniert werden.
   In einer bevorzugten Ausführungsform der Erfindung besteht die Wirbelschicht-Einrichtung 5 aus drei unabhängigen aber identischen Trocknerbehälter. Der erste Behälter wird zur Vortrocknung mit wahlweise hohen Temperaturen eingesetzt, der zweite zur Haupttrocknung und der dritte zur Nachtrocknung oder Kühlung.
   Bei Verwendung einer zusätzlichen Coating-Stufe und/oder Granulier-Stufe wird der dritte Behälter 18 als Trockner nach der Coating- bzw. Granulier-Stufe geschaltet und übernimmt die Nachtrocknung des beschichteten bzw. granulierten Gutes. Coating- und Granulier-Stufe sind in diesem Fall auch als Wirbelschicht-Behälter ausgebildet und besitzen noch zusätzlich eine Sprüheinrichtung für das Coating bzw. Granulieren.
   Das Produkt durchläuft jeden Wirbelschicht-Behälter in horizontaler Richtung. Die Aufenthaltsdauer pro Behälter variiert je nach Produktcharakteristika und kann bis 5 Minuten betragen. Sobald ein Trocknungsschritt beendet ist, wird die Charge mit Hilfe des durch die nächste Stufe erzeugten Unterdruckes weiter gefördert, worauf die entleerte Stufe sofort wieder mit einer nachfolgenden Produktecharge beschickt wird.
4. Produktkühlung und -abscheidung:
   Nach dem Trocknungsprozess wird das Produkt in den Produktabscheider 6 gefördert. Die Förderung erfolgt nach dem gleichen Prinzip wie die Förderung zwischen den einzelnen Wirbelschicht-Behältern. Das Trockengranulat gelangt anschliessend in den Container 7.
5. Reinigungsprozess:
   Die Reinigung sämtlicher Anlageeinheiten und deren Verbindungen erfolgt durch das erfindungsgemässe Reinigungssystem. Dazu sind alle mit 30 gekennzeichneten Reinigungsdüsen mit einer zentralen Reinigungsanlage verbunden, so auch die Reinigungsdüsen 51 der Granuliereinheit 40. In der zentralen Reinigungsanlage wird das Reinigungswasser entsprechend mit Reinigungsmitteln aufbereitet, und über eine Hochdruck-Förderpumpe den verschiedenen Düsen zugeführt. Zeitpunkt, Reinigungsdauer, sowie auch spezifische Reinigungsparameter, wie Menge der zu verwendenden Reinigungsmittel und dergleichen, können hierbei wahlweise manuell durch eine Person bestimmt oder durch die zentrale Steueranlage 80 automatisch festgelegt werden. Im Anschluss an jede durchgeführte Reinigung werden die verschiedenen Reinigungsdüsen - und im Falle des Mischers 40 auch die Lanze 52-mittels Pressluft ausgeblasen und anschliessend getrocknet.

## Patentansprüche

1. Anlage für die chargenweise, insbesondere quasi-kontinuierliche Behandlung eines teilchenförmigen Gutes, mit folgenden Anlageeinheiten:
- einem ersten Container (2) zur Aufnahme des vorgemischten Gutes,
- einem mit dem Auslass des Containers (2) verbundenen Fördersystem (3) enthaltend eine Dosierungsvorrichtung und eine Einwaagevorrichtung,
- einer in Prozessrichtung an das Fördersystem (3) angeschlossenen Misch- und Rühreinrichtung (4, 40),
- einer sich an die Misch- und Rühreinrichtung (4, 40) anschliessenden Homogenisiervorrichtung (14),
- einer Wirbelschicht-Einrichtung (5) mit mindestens zwei Behältern zum Trocknen und allenfalls Granulieren und/oder Beschichten des Gutes
- einem mit dem Ausgang der Wirbelschicht-Einrichtung verbundenen Produktabscheider (6), und
- einem zweiten Container (7) zur Aufnahme des Endproduktes; **dadurch gekennzeichnet, dass** alle Anlageeinheiten wasserdicht sind, dass ein Reinigungssystem vorhanden ist, welches eine Reinigung der gesamten Anlage (1) ohne Öffnen der verschiedenen Anlageeinheiten erlaubt, wozu
- in der Zu- und Ableitung der Misch- und Rühreinrichtung (4),
- in der Homogenisiervorrichtung (14),
- in den Behältern (16, 17, 18) der Wirbelschicht-Einrichtung (5),
- in dem Produktabscheider (6), und
- im Endproduktcontainer (7),
je mindestens eine an eine zentrale Reinigungsanlage angeschlossene Reinigungsdüse angeordnet ist, und dass diese Reinigungsdüsen so ausgebildet sind, dass sie beim Reinigen der Anlage in den Innenraum der entsprechenden Anlageeinheit ausgefahren und beim Behandeln des Gutes vollständig in die den genannten Innenraum begrenzende Wandung eingefahren werden können.

2. Anlage nach Anspruch 1, **dadurch gekennzeichnet, dass** die Misch- und Rühreinrichtung (4) eine Granuliereinheit ist.

3. Anlage nach Anspruch 1 oder 2, **gekennzeichnet durch** eine zentrale Steueranlage (80) zur automatischen Steuerung der Reinigungsanlage, so dass die Reinigung ohne jeglichen manuellen Eingriff **durch** eine Person durchführbar ist.

4. Granuliereinheit, insbesondere für eine Anlage nach Anspruch 1, mit einer doppelwandigen Kammer (8, 41), einem in den Innenraum (9) der Kammer (8, 40) mündenden Gut-Einlass (11), einem Gutauslass (13), einem um eine im wesentlichen horizontale Achse drehbaren Rotor (10) mit einer Welle (24, 43) und entlang von dieser verteilten Rührorganen (25), und einer Antriebsvorrichtung zum Drehen des Rotors (10), **dadurch gekennzeichnet, dass** die Antriebsmittel ausgebildet sind, um die Drehrichtung der genannten Welle (24, 43) abwechselnd zu ändern, dass die am weitesten von der Achse entfernten Rändern der Rührorgane (25) bis auf einen schmalen Spalt von vorzugsweise wenigen Zehntel Millimetern an die Mantel-Innenfläche stossen, und dass auf der Welle (43) mehrere Flachstrahldüsen (51) angeordnet sind, die über mindestens einen Durchgang mit einer Steuerlanze (52) verbunden sind, welche ihrerseits einen axialen Durchgang (53) besitzt, sich koaxial durch die Welle (43) erstreckt und im Antriebsbereich der Granuliereinheit (40) mit einem Flüssigkeitsspender (54) verbunden ist.

5. Granuliereinheit nach Anspruch 4, **dadurch gekennzeichnet, dass** die Welle (43) auf einer Antriebswelle (44) aufgesteckt und freifliegend auf dieser gelagert ist.

6. Granuliereinheit nach Anspruch 4 oder 5, **dadurch gekennzeichnet, dass** die Düsen (51) einen Austrittswinkel von 120° besitzen.

7. Granuliereinheit nach einem der Ansprüche 4 bis 6, **dadurch gekennzeichnet, dass** die Düsen (51) über den Umfang der Mischerwelle (43) verteilt sind.

8. Granuliereinheit nach einem der Ansprüche 3 bis 7, **dadurch gekennzeichnet, dass** die Steuerlanze über einen Pneumatikzylinder, der so viele verschiedene Positionen anfahren kann, wie Düsen auf der Welle vorhanden sind, axial verschoben werden kann, dass auf der Steuerlanze Öffnungen vorhanden sind, von denen jeweils eine mit einer bestimmten Stellung des Pneumatikzylinders in Übereinstimmung mit dem Eintrittskanal einer Düse gebracht werden kann.

9. Wirbelschicht-Einrichtung, insbesondere für eine Anlage nach einem der Ansprüche 1 bis 3, **gekennzeichnet durch** mindestens zwei, vorzugsweise mindestens drei nebeneinander angeordnete Wirbelschicht-Behälter (16, 17, 18).

10. Verfahren für die chargenweise, insbesondere quasikontinuierliche Behandlung eines teilchenförmigen Gutes, unter Verwendung der Anlage nach einem der Ansprüche 1 bis 3, **gekennzeichnet durch** die nacheinander ablaufenden Verfahrensschritte Chargenvorlage, Dosierung, Granulierung, Trocknung und Produktsammlung und **durch** einen Reinigungsprozess, mit welchem ohne Öffnen der verschiedenen Anlageeinheiten die gesamte Anlage (1) gereinigt werden kann.
